# EUROPÄISCHE PATENTSCHRIFT

(11) **EP 2 299 263 B1**
(45) Veröffentlichungstag und Bekanntmachung des Hinweises auf die Patenterteilung: **26.10.2016**
(21) Anmeldenummer: 10175118.8
(22) Anmeldetag: 02.09.2010
(51) Int. Cl.: G01N 31/22

(54) **Verfahren zur Überprüfung eines Sterilisationsprozesses und Sterilisationsvorrichtung**
Method for testing a sterilisation process and sterilisation device
Procédé de contrôle d'un processus de stérilisation et dispositif de stérilisation

(30) Priorität: 11.09.2009 DE 102009040979
(43) Veröffentlichungstag der Anmeldung: 23.03.2011
(73) Patentinhaber: Krones AG, 93073 Neutraubling (DE)
(72) Erfinder: Stammel, Volker, 93073 Neutraubling (DE); Engelhard, Patrick, 93073 Neutraubling (DE); Sobiech, Bernd, 93073 Neutraubling (DE)
(74) Vertreter: Bittner, Bernhard

(56) Entgegenhaltungen:
- WO-A1-98/52621
- WO-A2-96/33242
- JP-B- 49 046 440
- US-A- 3 704 096
- US-A- 5 139 957

## Beschreibung

Die vorliegende Erfindung bezieht sich auf ein Verfahren zum Überprüfen eines Sterilisationsprozesses für Verpackungsmittel bzw. eines Sterilisationsprozesses für Maschinen , sowie auf eine Vorrichtung zum Sterilisieren von Verpackungsmitteln.

Aus dem Stand der Technik sind unterschiedliche Abfüllanlagen bekannt. Teilweise dienen diese Abfüllanlagen auch zur Abfüllung unter aseptischen oder hygienischen Bedingungen. Insbesondere bei solchen Anlagen ist es teilweise erforderlich, das abzufüllende Verpackungsmittel, wie beispielsweise ein Kunststoffbehältnis, vor der Befüllung zu entkeimen bzw. zu sterilisieren. Als Sterilisationsverfahren sind hierbei beispielsweise die trockene Verpackungsmittelentkeimung mit gasförmigem Wasserstoffsuperoxid (H₂O₂) ohne Kondensation oder auch die nasse Verpackungsmittelentkeimung mit einem Gemisch aus Dampf und Oxidationsmittel wie beispielsweise Peressigsäure oder anderen Oxidationsmitteln, wie beispielsweise gasförmigem Wasserstoffperoxid bei Kondensation, bekannt.

In der DE 10 2006 053 193 A1 werden eine Vorrichtung und ein Verfahren zur Herstellung von Kunststoffbehältern beschrieben. Dabei wird in einer Behandlungsstation eine Sterilisation zumindest eines Teils der Behälterwand mit einem Sterilisationsmedium vorgenommen, wobei es sich bei diesem Sterilisationsmedium um ein flüssiges und/oder gasförmiges Sterilisationsmedium handeln kann.

Die DE 10 2005 012 507 A1 beschreibt ein Verfahren und eine Vorrichtung zum Sterilabfüllen von Flüssigkeiten. Hierbei werden die Behältnisse mit H₂O₂ sterilisiert, wobei die Temperatur der Behältnisse so eingestellt werden kann, dass eine Kondensation des H₂O₂ auf der Behältnisoberfläche verhindert wird.

Aus der EP 1 144 016 B1 sind ein Verfahren und eine Vorrichtung zum Sterilisieren von Verpackungsbehältern bekannt. Dabei wird einer Mischdüse gleichzeitig ein flüssiges Desinfektionsmittel und Wasserdampf getrennt zugeführt, so dass durch die Mischdüse ein Gemisch aus vernebeltem und/oder verdampften Desinfektionsmittel und Wasserdampf gebildet wird.

Die Gegenstände der DE 10 2006 053 193 A1, der DE 10 2005 012 507 A1 und der EP 1 144 016 B1 werden hiermit durch Bezugnahme vollinhaltlich zum Gegenstand der vorliegenden Anmeldung gemacht. Weiterhin wird darauf hingewiesen, dass neben dem Begriff der Sterilisationseinrichtung bzw. der Sterilisation teilweise auch die Begriffe Desinfektionseinrichtung und Desinfektion verwendet werden.

Bei den Verpackungsmitteln kann es sich beispielsweise um hohlkörperartige Verpackungsmittel, wie Vorformlinge, Flaschen, Kartons, Becher, Verschlüsse und dergleichen handeln. Weiterhin kann es sich bei den Verpackungsmitteln auch um Packstoffbahnen, wie beispielsweise Kartons, Kunststofffolien, Aluminiumfolien und dergleichen handeln.

Aus dem Stand der Technik sind bereits Verfahren wie das Rollflaschen - Verfahren oder CR (Count Reduktion) - Tests bekannt, um derartige Sterilisationsprozesse zu überprüfen. Üblicherweise wird bei diesen Verfahren die Wirkung des Sterilisationsmittels, beispielsweise Wasserstoffperoxid in einer Sterilisationskammer überprüft. Diese Verfahren sind jedoch relativ aufwendig hinsichtlich der Aufarbeitung und des Handlings.

Weiterhin sind bei diesen Verfahren sehr viele manuelle Tätigkeiten, die nur durch einen Benutzer durchgeführt werden können, erforderlich. Weiterhin erlauben derartige Verfahren ein quantitatives ggf. auch qualitatives Verfahren, jedoch üblicherweise ist es unter erhöhtem Aufwand möglich, die exakten, kritischen Stellen auf dem Verpackungsmittel, wie beispielsweise einen Bodenbereich eines Kunststoffbehältnisses oder gewellte oder gerillte Bereiche, zu überprüfen. Weiterhin sind insbesondere mikrobiologische Tests empfindlich gegenüber Außeneinflüssen und daneben nehmen diese Tests sehr viel Zeit in Anspruch.

Der vorliegenden Erfindung liegt daher die Aufgabe zugrunde, die Überprüfung eines Sterilisationsprozesses für Verpackungsmittel und/oder Maschinen, insbesondere Maschinen zur Behandlung von Behältnissen zu vereinfachen. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Das erfindungsgemäßen Verfahren ist im unabhängigen Anspruch 1 definiert.

Beim erfindungsgemäßen Verfahren kommt es zu einer chemischen Reaktion zwischen dem oxidierbaren Medium und dem Oxidationsmittel. Die Auswirkungen dieser chemischen Reaktion sind vorteilhaft (insbesondere optisch) wahrnehmbar. Das Oxidationsmittel ist ein Sterilisationsmittel welches zur Sterilisation der Behältnisse bzw. der Maschinen oder Maschinenteile dient, so dass die Beaufschlagung mit dem Sterilisationsmittel unmittelbar überprüft werden kann.

Während bei den aus dem Stand der Technik bekannten Verfahren indirekt überprüft wird, ob ein Sterilisationsmittel in einem bestimmten Bereich, beispielsweise in einer Sterilisationskammer, vorhanden ist, wird bei dem hier vorgeschlagenen Verfahren überprüft, ob das Sterilisationsmedium tatsächlich auf dem Verpackungsmittel bzw. der Maschine appliziert wurde. Damit wird hier vorgeschlagen, dass der Nachweis einer oxidativen Reaktion in kritischen Zonen erfolgt, bzw. ein positiver Nachweis der Behandlung in oder auf einem Verpackungsmittel durch eine bestimmte chemische Reaktion, beispielsweise eine Entfärbung von Kaliumpermanganat (KMnO₄).

Der Vorteil dieses Verfahrens besteht darin, dass es automatisierbar ist und die Möglichkeit einer Schwachstellenanalyse bei stark konturiertem Behälterdesign erlaubt. Weiterhin ist das Verfahren schnell durchführbar und auch einfach und automatisch auswertbar.

Vorzugsweise sind die genannten Bereiche Innenwandungen des Behältnisses. So ist es beispielsweise möglich, dass die Beaufschlagung des ersten Bereichs dadurch erfolgt, dass das oxidierbare Medium auf die Oberfläche oder einen Teil der Oberfläche des zu untersuchenden Materials aufgebracht wird. Dieses Aufbringen kann beispielsweise durch Einwirkenlassen einer Lösung erfolgen. So ist es beispielsweise möglich, dass eine Kaliumpermanganat-Lösung auf Material einwirkt, wobei dies bevorzugt im sauren Milieu, d. h. durch Säurezugabe insbesondere Zugabe von H⁺ - Ionen erfolgen kann.

Bei einem vorteilhaften Verfahren liegt zwischen dem Beaufschlagen des Verpackungsmittels oder der Maschine mit dem oxidierbaren Medium und dem Beaufschlagen des Verpackungsmittels oder der Maschine mit dem Oxidationsmittel eine vorgegebene Zeitspanne in welcher das oxidierbare Medium auf die Oberflächen einwirkt. Zu diesem Zweck ist es beispielsweise möglich, das Verpackungsmittel in einem vorgegebenen Zeitraum zu lagern, wobei diese Lagerung besonders bevorzugt auch unter Lichtausschluss erfolgen kann. Vorteilhaft ist die vorgegebene Zeitspanne größer als 10 Minuten, bevorzugt größer als eine Stunde, besonders bevorzugt größer als ein Tag und besonders bevorzugt größer als zwei Tage. In Abhängigkeit von den Reaktionsbedingungen können die genannten Zeitspannen jedoch deutlich geändert werden.

Bei einem weiteren vorteilhaften Verfahren ist das oxidierbare Medium aus einer Gruppe von Medien ausgewählt, welche Kaliumpermanganat, Fuchsin, Kombinationen hieraus oder dergleichen enthält. Insbesondere ist es möglich, dass das genannte oxidierbare Medium durch das später aufzutragende Oxidationsmittel, bei dem es sich insbesondere auch um das im Arbeitsbetrieb verwendete Sterilisationsmedium handelt, oxidiert werden kann.

Bei einem weiteren vorteilhaften Verfahren erfolgt die Beaufschlagung des Verpackungsmittels mit dem Oxidationsmittel in einer an den Arbeitsbetrieb einer Anlage zum Sterilisieren von Behältnissen abgestimmten Weise. Wie oben erwähnt, dienen die Verfahren zur Überprüfung eines Sterilisationsvorgangs. Bei diesem Sterilisationsvorgang wird das Verpackungsmittel in einer vorbestimmten Weise mit dem Sterilisationsmedium beaufschlagt. Vorteilhaft werden für den Testbetrieb die genannten Verpackungsmittel in der gleichen Weise mit dem Sterilisationsmedium, welches auch das Oxidationsmittel darstellt, beaufschlagt, um auf diese Weise eine Prüfung der Anlage unter Betriebsbedingungen zu ermöglichen.

Vorzugsweise handelt es sich bei dem Oxidationsmittel um ein gasförmiges Oxidationsmittel und das zu sterilisierende Behältnis wird vorteilhaft für einen vorgegebenen Zeitraum mit diesem Oxidationsmittel beaufschlagt. Die physikalischen Parameter dieser Beaufschlagung wie Temperatur, Druck, Konzentration, Beaufschlagungszeit und dergleichen sind dabei vorteilhaft einstellbar.

Bei einem weiteren vorteilhaften Verfahren wird das Verpackungsmittel mit dem oxidierbaren Medium befüllt. So ist es möglich, dass beispielsweise eine Kaliumpermanganatlösung in die Behältnisse eingefüllt wird, um auf die Innenwandung der Behältnisse einzuwirken. Es wäre jedoch auch, beispielsweise zur Beaufschlagung einer Außenwandung des Behältnisses möglich, dass dieses in ein Kaliumpermanganatbad eingetaucht wird.

Vorteilhaft wird das oxidierbare Medium von dem Verpackungsmittel wieder entfernt, wobei dieses Entfernen insbesondere vor der Beaufschlagung mit dem Oxidationsmittel erfolgt. So ist es beispielsweise möglich, dass ein Überstand einer bestimmten Lösung wie einer Kaliumpermanganatlösung, entfernt wird. Vorteilhaft erfolgt anschließend ein Trocknen des Behältnisses bzw. ein Antrocknen der entstehenden Schicht. Bei einem weiteren vorteilhaften Verfahren ist es auch möglich, die Schicht zu befeuchten, beispielsweise mit Wasser oder mit einem sauren Medium, um die nachfolgende Reaktion zu verbessern.

Bei einem weiteren vorteilhaften Verfahren erfolgt ein Befüllen unter saurem Milieu, beispielsweise bei einem pH-Wert von ungefähr 4. Es wäre jedoch auch möglich, unter nicht sauren Bedingungen zu befüllen. Auch wäre es möglich, dass das Behältnis insbesondere nach dem Einwirken des oxidierenden Mediums nicht getrocknet wird. Ein Trocknen der Behandelten Oberfläche ist insbesondere für das trockene Sterilisationsverfahren und insbesondere das Sterilisationsverfahren unter Verwendung von H₂O₂ ohne Kondensation, vorteilhaft. Besonders bevorzugt wird die optische Inspektion des Schnittbereichs dahingehend durchgeführt, dass eine auftretende Entfärbung des oxidierbaren Mediums beobachtet wird. Dabei ist insbesondere eine visuelle Erkennung einer derartig auftretenden Entfärbung vorteilhaft. Es wäre jedoch auch möglich, dass zur Detektion photometrische Verfahren oder auch Kameras verwendet werden. Dabei wäre es möglich, dass beispielsweise ein Drehen des Behältnisses an einer stationären Kamera stattfindet und von dieser beobachtet wird oder auch mehrere Kameras vorgesehen sind.

Vorteilhaft ist das Oxidationsmittel aus einer Gruppe von Oxidationsmitteln ausgewählt, welche H₂O₂, Peressigsäure, Chlordioxid, Ozon, Kombinationen hieraus und dergleichen enthält. So ist es auch möglich, dass ein entsprechend präpariertes bzw. mit dem oxidierbaren Medium behandeltes Behältnis in einem Maschineneinlauf einer Sterilisationsvorrichtung eingebracht wird, damit es in der gleichen Weise behandelt wird wie die übrigen Behältnisse. Am Auslauf kann dieses Behältnis wieder entnommen werden und die Wirksamkeit des Sterilisationsprozesses begutachtet werden.

Damit wird allgemein ein oxidierbarer Indikator durch Kontakt mit einem oxidativ wirkenden Entkeimungsmittel farblich verändert, sodass es durch die Oxidation zu einem erkennbaren Farbumschlag, beispielsweise von violett zu farblos kommt. Durch diese Farbreaktion wird die oxidative Wirkung des Entkeimungsverfahrens auf ein Verpackungsmittel oder eine Maschinen/Anlagenoberfläche nachgewiesen, wobei es sich bei dem Sterilisationsmittel unter anderem um Wasserstoffsuperoxid handeln kann. Die Nachweisreaktion durch Farbumschlag ist ein bekanntes Verfahren nach der chemischen Formel:

5H₂0₂ + 2 KMnO₄ + 3H₂SO₄ → 2MnSO₄ + K₂SO₄ + 8H₂O + 5 O₂.

Das Kaliumpermanganat wird daher vorteilhaft mit einem H⁺ Ionenlieferanten gemischt, beispielsweise einer beliebigen Säure, wie im obigen Beispiel Schwefelsäure und danach für eine definierte Zeit (beispielsweise 4 Tage), insbesondere unter Raumbedingungen auf das Verpackungsmittel aufgebracht. Vorteilhaft wird anschließend das Verpackungsmittel bei Raumbedingungen (z. B. einer Temperatur von 20°C und einer Luftfeuchte von 50%, vorteilhaft lichtgeschützt) gelagert.

In dieser Zeit bildet sich ein bräunlich violetter Farbfilm auf der Oberfläche des behandelten Verpackungsmittels, oder auch, falls der Nachweis in einer Maschine erfolgen soll, in einem Bereich der Maschine aus. Es wird daher darauf hingewiesen, dass das vorliegende Verfahren nicht nur zur Überprüfung eines Sterilisationsprozesses von Verpackungsmitteln dienen kann, sondern auch zur Überprüfung eines Sterilisationsprozesses von Anlagenteilen und insbesondere von Anlagenteilen, welche Bestandteile einer Anlage zum Behandeln von Behältnissen sind. Eine derartige Anlage kann aus einer Gruppen von Anlagen ausgewählt sein, welche Etikettiermaschinen, Füllmaschinen, Sterilisationsanlagen für Behältnisse, Transporteinrichtungen, Verschließanlagen für Behältnisse, Blasformmaschinen und dergleichen enthält.

Der genannte Niederschlag kann auch ohne eine H⁺ - Ionenquelle ausgebildet werden, die Farbreaktion wird allerdings durch den Säurezusatz verstärkt. Für die Aufbereitung kommen vorteilhaft handelsübliche Chemikalien zum Einsatz. Die Verpackungsmittel können dabei, wie oben erwähnt, sowohl Hohlkörper, wie Kunststoffvorformlinge aus PET, Verschlüsse, Becher sowie bereits produzierte Flaschen und Kartonverpackungen sein, als auch Packstoff sein, als auch Packstoffbahnen und Aluminiumfolien zur Versiegelung von Verpackungsöffnungen.

Weiterhin kann mit dem Verfahren der Nachweis der Reaktion von einem Oxidationsmittel auf Anlagen oder Maschinenoberflächen nachgewiesen werden, wie beispielsweise auch bei einem Sprühschattentest für Oberflächenreinigungssysteme.

Damit dient das erfindungsgemäße Verfahren der Visualisierung eines derzeit nicht visuell detektierbaren Entkeimungs- bzw. Sterilisationsprozesses (trockene, nicht kondensierende Entkeimung) mittels gasförmigen H₂O₂. Das Verfahren ist darüber hinaus ebenso geeignet, die Wirksamkeit eines nassen Oxidationsmittels auf Oberflächen zu visualisieren, wie z. B. den Einsatz von versprühtem nassen Entkeimungsmittel, wie z.B. Peressigsäure oder H₂O₂, sowie kondensierende Entkeimungsmittel wie z. B. H₂O₂-Gas auf Oberflächen.

Mögliche Anwendungsgebiete sind daher u. a. die Visualisierung der Reaktion von oxidativ wirkenden Entkeimungsverfahren oder Medien auf Verpackungsmitteloberflächen wie den oben erwähnten Kunststoffvorformlingen, Kunststoffflaschen, Kunststoffbecher, Tüten mit beschichteten Oberflächen (wie z. B. Kunststoffpolymerbeschichtungen und Alubeschichtungen), Kartonagen mit beschichteten Oberflächen (z. B. Kunststoffpolymerbeschichtungen, Alubeschichtungen) oder Kartonverpackungen mit beschichteten Oberflächen der oben genannten Art. Daneben kommen als Anwendungsgebiete auch Folien bzw. Folien mit beschichteten Oberflächen, z. B. Kunststoffpolymerbeschichtungen, Alubeschichtungen oder auch wie oben erwähnt Maschinen- oder Anlagenoberflächen (z. B. von Abfüllmaschinen oder von Laborinventar) in Betracht.

Das erfindungsgemäße Verfahren kann zudem genutzt werden, um Prozessabläufe zu steuern wie z. B. Wechsel von Packmittelbahnen oder Start-Stop-Mechanismen bei prozesstechnischen Anlagen. So kann beispielsweise ein OK-Signal für die Wirksamkeit eingesetzter Packmittelsterilisationsverfahren bei Produktionsstart ausgegeben werden. Auch kann die Reaktion oxidativ wirkender Entkeimungsverfahren oder Medien während laufender Produktion getestet werden, indem beispielsweise Testflaschen in eine bereits laufende Anlage eingebracht werden, um die Wirksamkeit des Verfahrens oder eines Sterilisationsmittels zu bestätigen. Hierbei kommt bevorzugt eine übergeordnete Prozesssteuerungseinrichtung zum Einsatz, mit welcher die Testflaschen durch den gesamten Behandlungsprozess nachverfolgt und z.B. am Ende des Prozesses automatisch ausgeschleust werden.

Weiterhin kann das Verfahren als Hilfsmittel für die Überprüfung mikrobiologischer sensibler Prozesse im Rahmen der Inbetriebnahme bzw. Qualifizierung und von Requalifizierungsprozessen verwendet werden.

Die vorliegende Erfindung ist weiterhin auf eine Vorrichtung zum Sterilisieren von Verpackungsmitteln und insbesondere von Behältnissen oder von Anlagenteilen gerichtet. Die erfindungsgemäße Vorrichtung ist im Anspruch 9 definiert.

Bei dem Oxidationsmittel handelt es sich um ein Sterilisationsmedium, welches zum Sterilisieren der Behältnisse dient.

Bei der Beaufschlagungseinrichtung handelt es sich insbesondere um eine Beaufschlagungseinrichtung, welche die Behältnisse mit einem flüssigen Medium beaufschlagt. Besonders bevorzugt handelt es sich bei der Beaufschlagungseinrichtung um eine Einfülleinrichtung, welche das oxidierbare Medium in die besagten Behältnisse einfüllt.

Die Inspektioneinrichtung der erfindungsgemäßen Vorrichtung erfasst farbliche Änderungen des beaufschlagten Bereichs. Dabei kann es sich beispielsweise um eine Inspektionseinrichtung handeln, welche die Behältnisse beleuchtet und ein Bild dieser Behältnisse aufnimmt, wobei Farbumschläge dieser Bilder festgestellt werden.

Weiterhin weist besonders vorteilhaft die Vorrichtung eine Trocknungseinrichtung zum Trocknen des Verpackungsmittels auf, wobei diese Trocknungseinrichtung in der Transportrichtung des Verpackungsmittels zwischen der Beaufschlagungseinrichtung und der Sterilisationseinrichtung angeordnet ist.

Vorteilhaft ist die Transporteinheit derart gestaltet, dass die Einwirkzeit des oxidierenden Mediums auf das Verpackungsmittel anpassbar ist. So wäre es beispielsweise möglich, dass eine spezielle Testflasche, welche mit dem oxidierbaren Medium behandelt wurde, für einen vorgegebenen Zeitraum, beispielsweise 12 Stunden in der besagten Transporteinheit belassen wird, damit dem oxidierbaren Medium die Möglichkeit gegeben wird, auf das Behältnis einzuwirken.

Weitere Vorteile und Ausführungsformen ergeben sich aus den beigefügten Zeichnungen:

Darin zeigen:
- Fig. 1: eine Darstellung zur Veranschaulichung eines möglichen Verfahrensablaufes;
- Fig. 2: eine mögliche Ausführungsform einer erfindungsgemäßen Vorrichtung;
- Fig. 3: eine Darstellung einer weiteren Ausführungsform einer erfindungsgemäßen Vorrichtung;
- Fig. 4: eine Darstellung einer Vorrichtung zum Sterilisieren von Behältnissen, und
- Fig. 5: eine Darstellung einer Inspektionseinheit für eine erfindungsgemäße Vorrichtung.

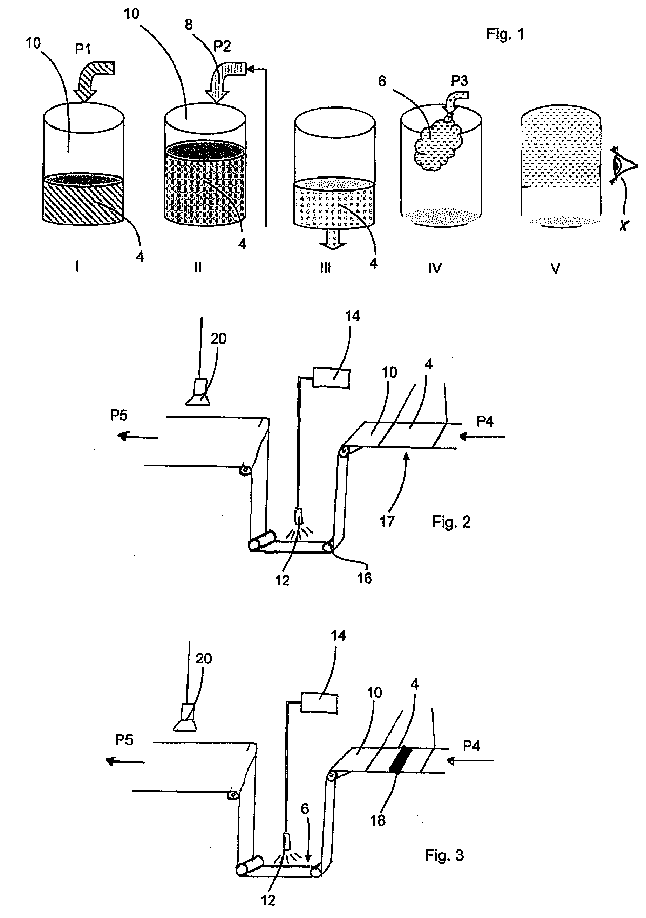

Fig. 1 veranschaulicht einen möglichen erfindungsgemäßen Verfahrensablauf. Dabei wird in einem ersten Verfahrensschritt I ein Verpackungsmittel 10, wie beispielsweise ein Behältnis, mit einem oxidierbaren Indikator, hier einer Kaliumpermanganatlösung befüllt, wie durch den Pfeil P1 veranschaulicht wird. Die Lösung selbst ist hier mit dem Bezugszeichen 4 gekennzeichnet. Nach dem Befüllen wird das mit dem oxidierbaren Medium 4 befüllte Behältnis für einen vorgegebenen Zeitraum gelagert, beispielsweise für einen Zeitraum von 4 Tagen (Verfahrensschritt II). Optional kann noch eine Säure 8 (Pfeil P2) zugegeben werden, wie beispielsweise H₂SO₄ um die Reaktion zu verstärken.

In einem weiteren Verfahrensschritt III wird das Behältnis wieder entleert, nachdem sich das oxidierbare Medium 4 hier an der Innenwandung des Behältnisses in Form einer Schicht niedergeschlagen hat. Optional kann das Behältnis 10 in dem Verfahrensschritt III auch noch getrocknet werden. Die Schicht weist hier eine violette Färbung auf. In einem Verfahrensschritt IV wird ein Oxidationsmittel 6 zugegeben (Pfeil P3), wobei es sich hier um gasförmiges H₂O₂ handelt. Dabei kann dieses Oxidationsmittel beispielsweise in einer Konzentration von 3500 ppm und beispielsweise bei Temperaturen im Bereich von 60° - 100° bevorzugt von 75° - 85° zugegeben werden.

Nach der Zugabe (Schritt V) wird durch den Kontakt das Oxidationsmittel mit dem oxidierbaren Medium eine Entfärbung auftreten, d. h. die bislang violett gefärbte Schicht wird farblos werden. Durch visuelle Begutachtung des Behältnisses 10 kann überprüft werden, in welchen Bereichen das Oxidationsmittel auf das Behältnis bzw. z.B. dessen Innenwandung getroffen ist, da nur bzw. insbesondere in diesen Bereichen der besagte Farbumschlag auftritt. Auf diese Weise kann insbesondere überprüft werden, ob räumlich kritische Stellen beispielsweise im Boden- oder Schulterbereich oder etwaigen Rillen des Behältnisses ebenfalls in ausreichender Weise desinfiziert werden. In dem Verfahrensschritt IV wird das Oxidationsmittel insbesondere in der Weise zugegeben, wie es auch im Arbeitsbetrieb in die Getränkebehältnisse gelangt. Die Inspektion (Bezugszeichen X) des Behältnisses im Verfahrensschritt V kann auch automatisch durchgeführt werden und es wäre weiterhin möglich in Reaktion auf ein derartiges Inspektionsergebnis die Zuführung des Desinfektionsmittels zu modifizieren sodass sämtliche Bereiche des Behältnisses mit dem Oxidationsmittel beaufschlagt werden.

Das beschriebene Trocknen der Behältnisse 10 in dem Verfahrensschnitt III dient zu einer verbesserten Filmbildung auf der Innenoberfläche. Zum Nachweis der oxidativen Wirkung kann die Oberfläche wieder angefeuchtet werden, damit die Reaktion verbessert erfolgen kann. Durch Einsatz des oxidativ wirkenden Entkeimungsverfahrens (hier handelt es sich um ein H₂O₂-Luftgemisch) kommt es zu einer Reaktion mit dem Kaliumpermanganat und, wie oben erläutert, zu einer Entfärbung die visuell detektiert werden kann. Zu dieser visuellen Detektierung können photometrische Verfahren, wie visuelle Beobachtung oder andere visuell arbeitende Verfahren, wie z. B. Kamerasysteme zur Anwendung kommen.

Es wird darauf hingewiesen, dass das hier beschriebene Verfahren auch vollständig automatisiert ablaufen kann, dass also beispielsweise im Rahmen eines Testbetriebs das oxidierbare Medium zugeführt wird, anschließend das Oxidationsmittel, bei dem es sich auch um das Sterilisationsmittel handelt, und in einem weiteren Verfahrensschritt eine optische Inspizierung der Behältnisse stattfindet.

Weiterhin möglich ist der Einsatz des Verfahrens im Laborbetrieb zur Überprüfung von neuem Flaschendesign für aseptische Anwendungen.

Fig. 2 zeigt eine mögliche Ausführungsform einer erfindungsgemäßen Vorrichtung, welche insbesondere für Packstoffbahnen dient. Hier wird ein Verpackungsmittel 10 in Form einer Packstoffbahn entlang der Pfeile P4 und P5 gefördert. Zur Förderung des Verpackungsmittels dienen hier eine Vielzahl von Rollen 16. Das Bezugszeichen 17 bezieht sich hier auf einen Bereich, in dem das oxidierbare Medium aufgebracht wurde. Das Bezugszeichen 12 kennzeichnet einen Sprühkopf oder eine Düse, mit der ausgehend von einem Reservoir 14 das Oxidationsmittel 6 auf das Verpackungsmittel 10 bzw. die Packstoffbahn aufgebracht wird. Das Bezugszeichen 20 kennzeichnet eine optische Inspektionseinheit, die überprüft, ob in den Bereichen, die sowohl mit dem oxiderbaren Medium 4 als auch mit dem Oxidationsmittel 6 beaufschlagt wurden, die oben erwähnte Entfärbung auftritt. An diese Vorrichtung kann sich beispielsweise (in Fig. 2 links) eine Packmaschine anschließen.

Fig. 3 zeigt eine Modifikation der in Fig. 2 gezeigten Vorrichtung. Hier dient das Verfahren zur Überprüfung einer Klebestelle 18 zwischen zwei Rollen oder zwei Bahnen. Hier wird ein oxidierbares Mittel 4 auf den Bereich aufgetragen, und anschließend auch wieder das Oxidationsmittel 6. Auf diese Weise kann durch den erwähnten Farbumschlag oder die Farbmarkierung die Position einer derartigen Klebestelle genau markiert werden.

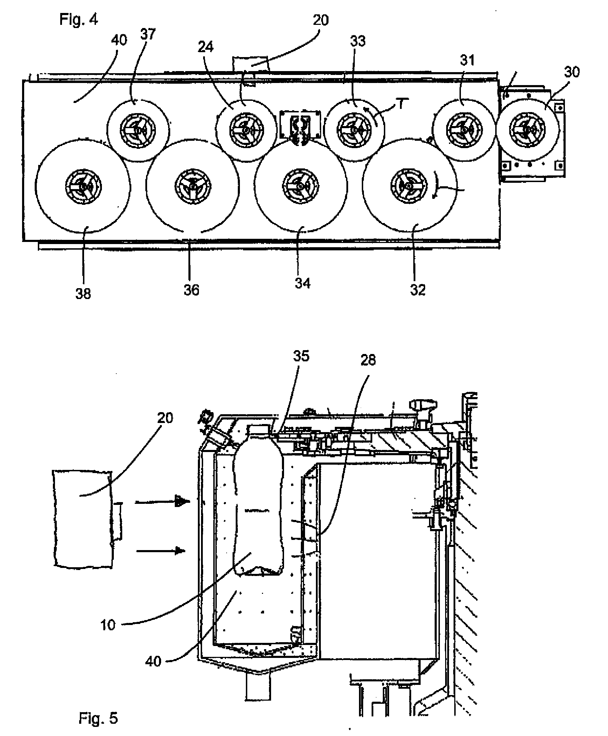

Fig. 4 zeigt ein weiteres Beispiel für eine Vorrichtung zum Sterilisieren von Behältnissen. Diese Vorrichtung weist dabei mehrere Transporteinheiten 32, 34, 36 und 38 auf, welche gemeinsam mit Übergabesternen die Behältnisse entlang eines Transportpfades T fördern. Das Bezugszeichen 30 bezieht sich auf einen Einlaufstern. Im Bereich der Transporteinheit 32 findet ein Vorwärmen der Behältnisse statt, im Bereich der Transporteinheit 34 ein Sterilisationsprozess mit einer nicht dargestellten Sterilisationseinrichtung, beispielsweise durch die Beaufschlagung mit dem Oxidationsmittel bzw. Sterilisationsmedium, im Bereich des Transportrades bzw. der Transporteinheit 36, kann ein Ausblasen der Behältnisse stattfinden und in einem Bereich des Transportrades bzw. der Transporteinheit 38 eine mögliche Inspektion der Behältnisse selbst oder auch ein weiteres Ausblasen.

Die Bezugszeichen 31, 33 und 37 beziehen sich auf Transporteinrichtungen wie beispielsweise Übergabesterne oder dergleichen mit denen die Behältnisse zwischen den einzelnen Transporteinheiten 32, 34, 36 und 38 transportiert werden.

Mittels einer Inspektionseinrichtung 20, wie beispielsweise einer Kamera, kann in einem Bereich nach dem Transportrad bzw. der Transporteinheit 34 eine Untersuchung der oben beschriebenen Art stattfinden dahingehend, ob ein Farbumschlag des oxidierbaren Mediums stattgefunden hat. Zu diesem Zweck kann ein präpariertes Behältnis (vgl. Schritt III in Fig. 1) der Anlage zugeführt werden und in der gleichen Weise behandelt werden wie ein Behältnis im normalen Arbeitsbetrieb. Die Inspektionseinrichtung 20 überprüft hier optisch, ob ein Farbumschlag aufgetreten ist.

Fig. 5 zeigt eine detaillierte Darstellung einer derartigen Inspektion. Hier wird das Behältnis 10 mit Hilfe des Transportrades 24 bzw. eines Greifelements 35 durch den Sterilisationsraum 40 gefördert und während dieses Transports von der Inspektionseinrichtung 20 beobachtet. Vorteilhaft kann auch eine Lichtquelle 28 vorgesehen sein, welche das Behältnis 10 von hinten beleuchtet, damit auf diese Weise die Beobachtung der Behältnisse 10 vereinfacht ist.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 4: Lösung/oxidierbares Medium
- 6: Oxidationsmittel, Sterilisationsmedium
- 8: Säure
- 10: Verpackungsmittel/Behältnis
- 12: Sprühkopf
- 14: Reservoir
- 16: Rollen
- 17: Bereich
- 18: Klebestelle
- 20: Inspektionseinrichtung
- 24: Transporteinheit / Transportrad
- 28: Lichtquelle
- 30: Einlaufstern
- 32, 34, 36, 38: Transporteinheit/ Transportrad
- 35: Greifelement
- 40: Sterilisationsraum
- P1, P2: Pfeil
- P3, P4, P5: Pfeil
- T: Transportpfad
- X: Inspektion
- I - V: Verfahrensschritte

## Patentansprüche

1. Verfahren zum Überprüfen eines Sterilisationsprozesses für Verpackungsmittel (10), die mit Hilfe einer Transporteinrichtung von einer Beaufschlagungseinrichtung zu einer Sterilisationseinrichtung transportiert werden oder für eine Maschine, mit der Verpackungsmittel (10) mit Hilfe einer Transporteinrichtung entlang eines vorgegebenen Transportpfades transportierbar sind, wobei das Verfahren die Schritte umfasst:
- Aufbringen eines flüssigen oxidierbaren Mediums (4) auf wenigstens einen ersten Bereich des Verpackungsmittels (10) oder der Maschine ;
- Beaufschlagen wenigstens eines zweiten Bereichs des Verpackungsmittels (10) oder der Maschine mit einem sterilisierenden Oxidationsmittel (6), wobei sich der erste Bereich des Verpackungsmittels (10) oder der Maschine und der zweite Bereich wenigstens abschnittsweise überschneiden; und
- optische Inspektion wenigstens eines Schnittbereiches, der sowohl mit dem oxidierbaren Medium als auch mit dem Oxidationsmittel beaufschlagt wurde.

2. Verfahren nach Anspruch 1,
**dadurch gekennzeichnet, dass**
die Bereiche Bereiche einer Wandung des Verpackungsmittels (10) sind.

3. Verfahren nach wenigstens einem der vorangegangenen Ansprüche,
**dadurch gekennzeichnet, dass**
zwischen dem Aufbringen des oxidierbaren Mediums auf das Verpackungsmittel (10) und dem Beaufschlagen des Verpackungsmittels (10) mit dem Oxidationsmittel eine vorgegebene Zeitspanne liegt, in welcher das oxidierbare Medium auf das Verpackungsmittel einwirkt.

4. Verfahren nach Anspruch 3,
**dadurch gekennzeichnet, dass**
die vorgegebene Zeitspanne größer als 10 Minuten, bevorzugt größer als 1 Stunde, besonders bevorzugt größer als ein Tag ist.

5. Verfahren nach wenigstens einem der vorangegangenen Ansprüche,
**dadurch gekennzeichnet, dass**
das oxidierbare Medium aus einer Gruppe von Medien ausgewählt ist, welche Kaliumpermanganat (KMnO₄), Fuchsin, Kombinationen hieraus oder dergleichen enthält.

6. Verfahren nach wenigstens einem der vorangegangenen Ansprüche,
**dadurch gekennzeichnet, dass**
die Beaufschlagung des Verpackungsmittels (10) mit dem Oxidationsmittel (6) in einer an den Arbeitsbetrieb einer Anlage zum Sterilisieren von Verpackungsmitteln abgestimmten Weise erfolgt.

7. Verfahren nach wenigstens einem der vorangegangenen Ansprüche,
**dadurch gekennzeichnet, dass**
das Verpackungsmittel (10) mit dem oxidierbaren Medium befüllt wird.

8. Verfahren nach wenigstens einem der vorangegangenen Ansprüche,
**dadurch gekennzeichnet, dass**
das oxidierbare Medium von dem Verpackungsmittel wieder entfernt wird.

9. Vorrichtung zum Sterilisieren von Verpackungsmitteln (10) auf einer Maschine, enthaltend
- eine Sterilisationseinrichtung (12), die ausgestaltet ist, um vorgegebene zweite Bereiche der Verpackungsmittel (10) oder der Maschine mit einem sterilisierenden Oxidationsmittel (6) zu beaufschlagen,
- eine Beaufschlagungseinrichtung, die stromaufwärts bezüglich der Sterilisationseinrichtung (12) vorgesehen ist und die ausgestaltet ist, um vorgegebene erste Bereiche der Verpackungsmittel (10) oder der Maschine mit einem flüssigen oxidierbaren Medium (4) zu beaufschlagen, wobei sich die vorgegebenen ersten Bereiche wenigstens teilweise mit den vorgegebenen zweiten Bereichen überschneiden,
- eine Transporteinrichtung die ausgestaltet ist, um Verpackungsmittel (10) von der Beaufschlagungseinrichtung zu der Sterilisationseinrichtung zu transportieren und
- eine Inspektionseinrichtung (20), die ausgestaltet ist, um zumindest die Bereiche, welche sowohl mit dem flüssigen oxidierbaren Medium (4) als auch mit dem sterilisierenden Oxidationsmittel (6) beaufschlagt wurden, optisch zu inspizieren.

10. Vorrichtung nach Anspruch 9,
**dadurch gekennzeichnet, dass**
die Vorrichtung eine in der Transportrichtung des Verpackungsmittels (10) stromabwärts bezüglich der Beaufschlagungseinrichtung angeordnete Entfernungseinrichtung aufweist, welche das Oxidationsmittel von dem Verpackungsmittel entfernt.

11. Vorrichtung nach wenigstens einem der Ansprüche 9 oder 10,
**dadurch gekennzeichnet, dass**
die Vorrichtung eine Trocknungseinrichtung zum Trocknen des Verpackungsmittels aufweist, wobei diese Trocknungseinrichtung in der Transportrichtung des Verpackungsmittels zwischen der Beaufschlagungseinrichtung und der Sterilisationseinrichtung angeordnet ist.

## Claims

1. A method for testing a sterilisation process for packaging means (10) and which are transported by means of a transport means starting from an application means to a sterilisation means or for a machine by means of which packaging means (10) can be transported along a pre-defined transport path with the aid of a transport means, the method comprising the following steps:
- acting upon at least one first region of the packaging means (10) or of the machine with a liquid oxidizable medium (4);
- acting upon at least one second region of the packaging means (10) or of the machine with a sterilising oxidizing agent (6), wherein the first region of the packaging means (10) or of the machine and the second region overlap at least in sections;
- visually inspecting at least one intersection region, which has been acted upon both with the oxidizable medium and with the oxidizing agent.

2. A method according to claim 1, **characterized in that** the regions are regions of a wall of the packaging means (10).

3. A method according to at least one of the preceding claims, **characterized in that** between the action of the oxidizable medium upon the packaging means (10) and the action of the oxidizing agent upon the packaging means (10) there is a pre-set period of time in which the oxidizable medium acts upon the packaging means.

4. A method according to claim 3, **characterized in that** the pre-set period of time is longer than 10 minutes, preferably longer than 1 hour, and in a particularly preferred manner longer than a day.

5. A method according to at least one of the preceding claims, **characterized in that** the oxidizable medium is selected from a group of media which contains potassium permanganate (KMnO₄), fuchsine, combinations thereof or the like.

6. A method according to at least one of the preceding claims, **characterized in that** the packaging means (10) is acted upon with the oxidizing agent (6) in a manner adapted to the working operation of a plant for the sterilisation of packaging means.

7. A method according to at least one of the preceding claims, **characterized in that** the packaging means (10) is filled with the oxidizable medium.

8. A method according to at least one of the preceding claims, **characterized in that** the oxidizable medium is removed again from the packaging means.

9. An apparatus for the sterilisation of packaging means (10) on a machine, containing
- a sterilisation means (12) which is designed to act upon pre-defined second regions of the packaging means (10) or the machine with a sterilising oxidizing agent (6),
- an actuation means which is provided upstream with respect to the sterilisation means (12) and which is designed to act upon pre-defined first regions of the packaging means (10) or the machine with a liquid oxidizing medium (4), wherein the pre-defined first regions intersect at least in part with the pre-defined second regions,
- a transport means which is designed to transport packaging means (10) starting from the actuation device to the sterilisation device, and
- an inspection means (20) which is designed to optically inspect at least those regions which have been acted upon both with the liquid oxidizable medium (4) and with the sterilising oxidizing means (6).

10. An apparatus according to claim 9, **characterized in that** the apparatus has a removal device which is arranged downstream with respect to the application device in the conveying direction of the packaging means (10) and which removes the oxidizing agent from the packaging means.

11. An apparatus according to at least one of the claims 9 or 10, **characterized in that** the apparatus has a drying device for drying the packaging means, wherein this drying device is arranged between the application device and the sterilization device in the conveying direction of the packaging means.

## Revendications

1. Procédé de contrôle d'un processus de stérilisation pour des moyens d'emballage (10), qui sont transportés à l'aide d'un dispositif de transport depuis un dispositif applicateur à un dispositif de stérilisation ou pour une machine au moyen de laquelle des moyens d'emballage (10) peuvent être transportés à l'aide d'un dispositif de transport le long d'un chemin de transport prédéfini, le procédé comprenant les étapes :
- d'application d'un milieu oxydable liquide (4) sur au moins une première zone du moyen d'emballage (10) ou de la machine ;
- d'exposition d'au moins une deuxième zone du moyen d'emballage (10) ou de la machine par un oxydant stérilisant (6), la première zone du moyen d'emballage (10) ou de la machine et la deuxième zone se chevauchant au moins en sections ; et
- d'inspection optique d'au moins une zone de coupe, qui a été exposée aussi bien au milieu oxydable qu'à l'oxydant.

2. Procédé selon la revendication 1,
**caractérisé en ce que**
les zones sont des zones d'une paroi du moyen d'emballage (10).

3. Procédé selon au moins l'une des revendications précédentes,
**caractérisé en ce qu'**
un laps de temps prédéfini, au cours duquel le milieu oxydable agit sur le moyen d'emballage, s'écoule entre l'application du milieu oxydable sur le moyen d'emballage (10) et l'exposition du moyen d'emballage (10) par l'oxydant.

4. Procédé selon la revendication 3,
**caractérisé en ce que**
le laps de temps prédéfini est supérieur à 10 minutes, de préférence supérieur à 1 heure, de manière particulièrement préférée supérieur à une journée.

5. Procédé selon au moins l'une des revendications précédentes,
**caractérisé en ce que**
le milieu oxydable est choisi dans un groupe de milieux, lequel contient le permanganate de potassium (KMnO₄), la fuchsine, des combinaisons des ces derniers ou similaire.

6. Procédé selon au moins l'une des revendications précédentes,
**caractérisé en ce que**
l'exposition du moyen d'emballage (10) par l'oxydant (6) est mise en oeuvre d'une manière adaptée aux conditions d'utilisation d'une installation de stérilisation des moyens d'emballage.

7. Procédé selon au moins l'une des revendications précédentes
**caractérisé en ce que**
le moyen d'emballage (10) est rempli du milieu oxydable.

8. Procédé selon au moins l'une des revendications précédentes,
**caractérisé en ce que**
le milieu oxydable est à nouveau éliminé du moyen d'emballage.

9. Dispositif de stérilisation de moyens d'emballage (10) sur une machine, contenant
- un système de stérilisation (12), qui est configuré pour exposer des deuxièmes zones prédéfinies des moyens d'emballage (10) ou de la machine par un oxydant stérilisant (6),
- un dispositif d'exposition, qui est situé en amont du système de stérilisation (12) et qui est configuré pour exposer des premières zones prédéfinies des moyens d'emballage (10) ou de la machine à un milieu oxydable liquide (4), les premières zones prédéfinies se chevauchant au moins en partie avec les deuxièmes zones prédéfinies,
- un dispositif de transport, qui est configuré pour transporter des moyens d'emballage (10) du dispositif d'exposition au système de stérilisation et
- un dispositif d'inspection (20), qui est configuré pour inspecter optiquement au moins les zones qui ont été exposées aussi bien au milieu oxydable liquide (4) qu'à l'oxydant stérilisant (6).

10. Dispositif selon la revendication 9,
**caractérisé en ce que**
le dispositif comprend un dispositif d'élimination agencé en aval du dispositif d'exposition dans le sens de transport du moyen d'emballage (10), lequel élimine l'oxydant du moyen d'emballage.

11. Dispositif selon au moins l'une des revendications 9 ou 10,
**caractérisé en ce que**
le dispositif comprend un dispositif de séchage permettant de sécher le moyen d'emballage, ce dispositif de séchage étant agencé dans le sens de transport du moyen d'emballage entre le dispositif d'exposition et le système de stérilisation.
